# EUROPEAN PATENT APPLICATION

(11) **EP 4 664 583 A1**
(43) Date of publication of application: **17.12.2025**
(21) Application number: 23957127.6
(22) Date of filing: 31.10.2023
(51) Int. Cl.: H01M 10/0525

(54) **BATTERY CELL, BATTERY AND ELECTRICAL APPARATUS**

(71) Applicant: Contemporary Amperex Technology Co., Limited, Ningde, Fujian 352100 (CN)
(72) Inventor: CHEN, Shengwang, Ningde, Fujian 352100 (CN); HUANG, Shaobin, Ningde, Fujian 352100 (CN); GUO, Zhijun, Ningde, Fujian 352100 (CN); WANG, Peng, Ningde, Fujian 352100 (CN)
(74) Representative: Ran, Handong
(86) International application number: PCT/CN2023/128521
(87) International publication number: WO 2025/091250

(57) **Abstract**

A battery cell, a battery and an electrical apparatus, relating to the technical field of batteries. The battery cell comprises a casing, having a first opening; a first end cap assembly, used for covering the first opening, the first end cap assembly comprising protruding structures and a first electrode lead-out component; an electrode assembly, accommodated in the casing, the electrode assembly comprising a main body part and tabs extending from the main body part; and an isolation component, at least partially provided between the first electrode lead-out component and the main body part, wherein the isolation component comprises opening structures, reinforcement structures and isolation plates, the opening structures are protrudingly arranged on the surfaces of the isolation plates facing the first end cap assembly and are snap-fitted with the protruding structures, and the reinforcement structures are connected to the outer side walls of the opening structures, thus improving the reliability of the battery cell.

## Description

### TECHNICAL FIELD

The present application relates to the technical field of batteries, and in particular, to a battery cell, a battery, and an electric device.

### BACKGROUND

With the increasing severity of environmental pollution, the new energy industry has attracted more and more attention. In the new energy industry, battery technology is an important factor in its development.

Battery technology advancement requires consideration of various design factors, such as energy density, cycle life, and reliability. A battery cell includes a separation member, which is disposed between an end cover assembly and a tab of an electrode assembly to facilitate the connection between the tab and an electrode lead-out member of the end cover assembly. The structure of the separation member is critical to the reliability of the battery cell. Therefore, how to design a separation member to improve the reliability of the battery is a technical problem that needs to be solved urgently.

### SUMMARY

The present application provides a battery cell, a battery, and an electric device, which can improve the reliability of the battery.

In a first aspect, a battery cell is provided. The battery cell includes: a housing provided with a first opening; a first end cover assembly configured to cover the first opening, the first end cover assembly including a protruding structure and a first electrode lead-out member; an electrode assembly accommodated in the housing, the electrode assembly including a main body part and a tab extending from the main body part; and a separation member at least partially disposed between the first electrode lead-out member and the main body part. The separation member includes an opening structure, a reinforcing structure, and a separation plate, the opening structure is protrudingly disposed on the surface of the separation plate facing the first end cover assembly and is snap-fitted to the protruding structure, and the reinforcing structure is connected to an outer side wall of the opening structure.

In embodiments of the present application, the separation member is at least partially disposed between the first electrode lead-out member and the main body part, so that the tab can be at least partially separated from the main body part of the electrode assembly, thereby reducing the risk of the tab being inserted into the main body part and the risk of short circuit of the battery cell when the battery cell is subjected to an impact or the like. The opening structure of the separation member is disposed in a protruding manner on the surface of the separation plate facing the first end cover assembly and is snap-fitted to the protruding structure. In this way, the separation member can be fixedly connected to the first end cover assembly, so that the risk of movement of the separation member in the battery cell can be reduced, thereby reducing the risk of pulling or tearing the tab. Since the reinforcing structure is connected to the outer side wall of the opening structure, the reinforcing structure can disperse the force applied to the opening structure and can reinforce the opening structure to some extent. This reduces the risk of deformation of the opening structure when subjected to an external force, which helps to reduce the risk of tearing the tab due to the deformation of the opening structure, thereby improving the reliability of the battery cell.

In a possible implementation, the separation member includes a side plate surrounding the outer side of the separation plate. The side plate protrudes from the side of the separation plate facing away from the main body part. The reinforcing structure is connected between the outer side wall of the opening structure and the side plate.

In the above technical solution, since the side plate surrounds the outer side of the separation plate and protrudes from the side of the separation plate facing away from the main body part, the separation plate and the side plate can jointly define an accommodating recess, and the accommodating recess can accommodate at least a part of the tab. In addition, since the reinforcing structure is connected between the outer side wall of the opening structure and the side plate, when the opening structure is subjected to an external force, the force applied to the opening structure can be dispersed to the side plate of the separation member by the reinforcing structure, thereby reducing the risk of deformation of the opening structure, especially the risk of deformation of the opening structure in the thickness direction of the separation plate.

In a possible implementation, the side plate includes two long side walls and two short side walls. The two long side walls are respectively located on the two sides of the separation plate in the first direction, and the two short side walls are respectively located on the two sides of the separation plate in the second direction. The first direction is the width direction of the separation plate, and the second direction is the length direction of the separation plate.

In a possible implementation, the reinforcing structure includes a first reinforcing structure. One end of the first reinforcing structure is connected to the outer side wall of the opening structure, and the other end is connected to the long side wall.

In the above technical solution, when the opening structure is subjected to an external force, the force applied to the opening structure can be dispersed to the long side wall by the reinforcing structure, thereby reducing the risk of deformation of the opening structure.

In a possible implementation, the reinforcing structure includes two first reinforcing structures, and the two first reinforcing structures are respectively connected to the two long side walls. By providing two first reinforcing structures, the opening structure can be better supported and reinforced, thereby further reducing the risk of deformation of the opening structure.

In a possible implementation, the two first reinforcing structures are symmetrically disposed in the second direction. In this way, the opening structure can be provided with relatively large support and reinforcement by a relatively small number of reinforcing structures.

In a possible implementation, the reinforcing structure includes a second reinforcing structure. One end of the second reinforcing structure is connected to the outer side wall of the opening structure, and the other end is connected to the short side wall. In this way, in the case where the opening structure is subjected to an external force, the force applied to the opening structure can be dispersed to the short side wall by the reinforcing structure, thereby reducing the risk of deformation of the opening structure.

In a possible implementation, the outer side wall, the reinforcing structure, the side plate, and the separation plate enclose a first recess space. The region of the separation plate opposite to the first recess space is provided with at least one through hole penetrating through the separation plate.

The first recess space is a relatively enclosed space and is more prone to electrolyte accumulation. By providing at least one through hole penetrating through the separation plate in the region of the separation plate opposite to the first recess space, the electrolyte can flow out of the first recess space via the through hole, thereby reducing the risk of electrolyte accumulation in the first recess space.

In a possible implementation, the opening structure is a regular prism structure, and the extension direction of the reinforcing structure passes through the center of the opening structure. In this way, the reinforcing structure has a relatively long length, which helps to better reinforce the structure of the opening structure, thereby further reducing the risk of deformation of the opening structure.

In a possible implementation, the separation plate is provided with a channel. The channel is disposed in the middle region of the separation plate in the second direction. The tab passes through the channel and is electrically connected to the first electrode lead-out member. The second direction is the length direction of the separation plate. The opening structure is disposed in the end part region of the separation plate in the second direction.

In the above technical solution, since the channel is disposed in the middle region of the separation plate in the second direction and the opening structure is disposed in the end part region of the separation plate in the second direction, the alignment of the channel with the tab is facilitated, thereby enabling the tab to pass through the channel and to be electrically connected to the first electrode lead-out member.

In a possible implementation, the separation plate includes an inclined plate and a connecting plate connecting the inclined plate and the side plate. The inclined plate includes an inclined surface facing away from the main body part. In the thickness direction of the separation plate, the minimum distance between one end of the inclined surface proximal to the channel and the main body part is greater than the minimum distance between one end of the inclined surface distal to the channel and the main body part. One end of the reinforcing structure is connected to the outer side wall of the opening structure, and the other end is connected to the side plate and the connecting plate.

By providing the inclined surface, the gap between the separation plate and the tab can be reduced. This helps limit and shape the tab through the separation plate, contributing to maintaining the morphology of the tab. One end of the reinforcing structure is connected to the outer side wall of the opening structure, and the other end is connected to the side plate and the connecting plate. That is, the reinforcing structure, the side plate, and the connecting plate have the same intersection point. In this way, the reinforcing structure has a relatively long length, and this configuration also helps to disperse the force to more regions of the separation member by the reinforcing structure, thereby helping to further enhance the stability of the opening structure and reducing the risk of deformation of the opening structure.

In a possible implementation, the separation plate includes a first sub-separation plate and a second sub-separation plate that are spaced apart, and the channel is formed between the first sub-separation plate and the second sub-separation plate. In this way, the first sub-separation plate and the second sub-separation plate are disposed opposite to each other in the first direction. The first direction is the width direction of the separation member. The first sub-separation plate and the second sub-separation plate can limit the position of the tab (for example, a part of the tab located between an end surface and the separation plate) to reduce shaking and deformation of the tab.

In a possible implementation, in the thickness direction of the separation plate, the dimension h1 of the reinforcing structure and the dimension h2 of the opening structure satisfy: 0.5h2 ≤ h1 ≤ h2.

In the case where h1 ≥ 0.5h2, the reinforcing structure has a relatively appropriate dimension in the thickness direction of the separation plate, so that it can support and reinforce the opening structure. In the case where h1 ≤ h2, in the thickness direction of the separation plate, the reinforcing structure does not extend beyond the opening structure, which can reduce the risk of interference between the reinforcing structure and other components in the battery cell.

In a possible implementation, the thickness t of the reinforcing structure satisfies: 0.4 mm ≤ t ≤ 2 mm.

In the case where t ≥ 0.4 mm, the reinforcing structure has an appropriate thickness, so that it can well support and reinforce the opening structure. In the case where t ≤ 2 mm, the manufacturing of the reinforcing structure is facilitated. Thereby, the risk of the unevenness of the surface of the reinforcing structure and the unevenness of the thickness at different positions of the reinforcing structure can be reduced.

In a possible implementation, the first end cover assembly includes an end cover and an insulating member. The end cover is configured to cover the first opening, and the insulating member is provided with the protruding structure.

In the above technical solution, the end cover covers the first opening of the housing. In addition, the first electrode lead-out member on the end cover is electrically connected to the tab, and the protruding structure of the insulating member is snap-fitted to the opening structure of the separation member. By providing the first end cover assembly, the connection between the first end cover assembly, the separation member, and the electrode assembly is facilitated.

In a possible implementation, the housing is provided with a second opening opposite to the first opening. The battery cell further includes a second end cover assembly, and the second end cover assembly is configured to cover the second opening. In this way, the first end cover assembly and the second end cover assembly are configured to respectively cover the first opening and the second opening at the two ends of the housing, thereby facilitating the sealing of the housing.

In a possible implementation, the battery cell further includes an insulating film. The insulating film is sleeved over the outer surface of the electrode assembly and is disposed on the inner side of the housing. In this way, the electrode assembly can be separated from the housing, thereby reducing the risk of short circuit caused by the contact between the electrode assembly and the housing. In addition, the separation member can also be connected to the electrode assembly through the insulating film, thereby facilitating the assembly of the battery cell.

In a possible implementation, the battery cell further includes a side support plate. The side support plate is disposed between the electrode assembly and the inner side of the housing. The side support plate can provide support to the electrode assembly. In addition, the electrode assembly and the separation member can also be connected through the side support plate, thereby facilitating the assembly of the battery cell.

In a second aspect, a battery is provided, including the battery cell according to the first aspect or any one of the possible implementations thereof.

In a third aspect, provided is an electric device, which includes the battery according to the second aspect.

In embodiments of the present application, the separation member is at least partially disposed between the first electrode lead-out member and the main body part, so that the tab can be at least partially separated from the main body part of the electrode assembly, thereby reducing the risk of the tab being inserted into the main body part and the risk of short circuit of the battery cell when the battery cell is subjected to an impact or the like. The opening structure of the separation member is disposed in a protruding manner on the surface of the separation plate facing the first end cover assembly and is snap-fitted to the protruding structure. In this way, the separation member can be fixedly connected to the first end cover assembly, so that the risk of movement of the separation member in the battery cell can be reduced, thereby reducing the risk of pulling or tearing the tab. Since the reinforcing structure is connected to the outer side wall of the opening structure, the reinforcing structure can disperse the force applied to the opening structure and can reinforce the opening structure to some extent. This reduces the risk of deformation of the opening structure when subjected to an external force, which helps to reduce the risk of tearing the tab due to the deformation of the opening structure, thereby improving the reliability of the battery cell.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to an embodiment of the present application;
FIG. 2 is a schematic structural diagram of a battery according to an embodiment of the present application;
FIG. 3 is a schematic structural diagram of a battery cell according to an embodiment of the present application;
FIG. 4 is a schematic exploded view of a battery cell according to an embodiment of the present application;
FIG. 5 is a three-dimensional schematic structural diagram of a separation member according to an embodiment of the present application;
FIG. 6 is a top view of a separation member according to an embodiment of the present application;
FIG. 7 is a cross-sectional view of the separation member in FIG. 6 in the A-A direction;
FIG. 8 is a schematic structural diagram of a first end cover assembly according to an embodiment of the present application;
FIG. 9 is a schematic structural diagram of region B of the battery cell in FIG. 3; and
FIG. 10 is an enlarged schematic diagram of region C in FIG. 9.

The drawings are not drawn to scale.

### Reference numerals:

1: vehicle; 10: battery; 30: controller; 40: motor; 3: case.
2: battery cell; 21: housing; 22: electrode assembly; 23: separation member; 24: first end cover assembly; 25: second end cover assembly; 26: insulating film; 27: side support plate.
211: first opening; 212: second opening.
221: body part; 222: tab; 2221: end surface.
230: side plate; 231: opening structure; 232: connecting part; 233: separation plate; 2330: channel; 2351: first recess space; 2331: inclined plate; 2332: connecting plate; 2331a: inclined surface; 2311: outer side wall; 2301: long side wall; 2302: short side wall; 233a: first sub-separation plate; 233b: second sub-separation plate; 2310: second fixing part; 2312: guiding part; 2313: slot part.
241: protruding structure; 242: first electrode lead-out member; 2411: first fixing part; 2412: transition part; 2413: snap part; 243: end cover; 244: insulating member; 251: second electrode lead-out member.

### DETAILED DESCRIPTION

Implementations of the present application will be described in further detail with reference to the drawings and embodiments. The following detailed description of the embodiments and the drawings are used for the exemplary illustration of the principles of the present application, but are not intended to limit the scope of the present application. That is, the present application is not limited to the described embodiments.

In the description of the present application, it should be noted that, unless otherwise specified, "a plurality" means two or more; the orientations or positional relationships indicated by the terms "upper", "lower", "left", "right", "inner", "outer", and the like are merely for the convenience of describing the present application and simplifying the description, rather than indicating or implying that the apparatus or element referred to must have a specific orientation or be configured and operated in the specific orientation, and thus should not be construed as limitations to the present application. Furthermore, the terms "first", "second", "third", and the like are used for descriptive purposes only and should not be construed as indicating or implying relative importance. The "perpendicular" is not strictly perpendicular but is within the allowable range of error. The "parallel" is not strictly parallel but is within the allowable range of error.

The following description is given with the directional terms as illustrated in the drawings and is not intended to limit the specific structure of the present application. In the description of the present application, it should further be noted that unless otherwise explicitly specified or defined, the terms "mount", "connect", and "link" shall be construed broadly and may be, for example, fixed connection, detachable connection, or integral connection, or direct connection or indirect connection via an intermediate. For those of ordinary skill in the art, the specific meaning of the above terms in the present application may be interpreted according to the specific condition.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the present application, battery cells may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of the present application. The battery cell may be cylindrical, flat, rectangular parallelepiped-shaped, or in other shapes. This is also not limited in the embodiments of the present application. According to the way of encapsulation, battery cells are typically divided into cylindrical battery cells and prismatic and square battery cells. This is also not limited in the embodiments of the present application.

The battery mentioned in the embodiments of the present application refers to a single physical module including one or a plurality of battery cells to provide higher voltage and capacity. For example, the battery mentioned in the present application may include a battery pack, or the like. The battery generally includes a case used to encapsulate one or a plurality of battery cells. The case can prevent liquid or other foreign matters from affecting the charging or discharging of the battery cells.

A battery cell includes an electrode assembly and an electrolyte. The electrode assembly is composed of a positive electrode plate, a negative electrode plate, and a separator. The battery cell primarily works by the movement of metal ions between the positive electrode plate and the negative electrode plate. The positive electrode plate includes a positive electrode current collector and a positive electrode active substance layer. The surface of the positive electrode current collector is coated with the positive electrode active substance layer. The current collector not coated with the positive electrode active substance layer protrudes from the current collector coated with the positive electrode active substance layer. The current collector not coated with the positive electrode active substance layer serves as a positive electrode tab. Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer. The surface of the negative electrode current collector is coated with the negative electrode active substance layer. The current collector not coated with the negative electrode active substance layer protrudes from the current collector coated with the negative electrode active substance layer. The current collector not coated with the negative electrode active substance layer serves as a negative electrode tab. The material of the negative electrode current collector may be copper, and the negative electrode active substance may be carbon, silicon, or the like. To ensure the passing of a large current without fusing, there are a plurality of positive electrode tabs that are stacked together, and there are a plurality of negative electrode tabs that are stacked together. The material of the separator may be polypropylene (PP), polyethylene (PE), or the like. In addition, the electrode assembly may be a wound structure or a stacked structure, but the embodiments of the present application are not limited thereto.

To meet different power requirements, the battery may include a plurality of battery cells. The plurality of battery cells may be connected in series, in parallel, or in series-parallel. The series-parallel connection refers to a combination of series connection and parallel connection. Optionally, the plurality of battery cells may be first connected in series, in parallel, or in series-parallel to form a battery module, and then a plurality of battery modules are connected in series, in parallel, or in series-parallel to form a battery. That is, the plurality of battery cells may be directly assembled into a battery, or may be first assembled into a battery module, which is then assembled into a battery. The battery is further disposed in an electric device to provide electrical energy to the electric device.

Battery technology advancement requires consideration of various design factors at the same time, such as energy density, cycle life, discharge capacity, charging and discharging rate, and reliability. The structure of the battery cell is crucial to the performance of the battery cell. The battery cell includes an electrode assembly, an end cover assembly, a separation member, and a housing, where the housing is configured to accommodate the electrode assembly, the end cover assembly is configured to cover the housing, and the separation member is at least partially disposed between the tab and the electrode assembly to facilitate the connection of the tab to an electrode lead-out member of the end cover assembly. During the processes such as use or transportation of the battery cell, when the battery cell is subjected to collision, squeezing, or the like, the separation member easily moves, thereby affecting the supporting effect on the tab, which is not conducive to the improvement of the reliability of the battery cell. Therefore, the separation member is provided with an opening structure, and the first end cover assembly is provided with a protruding structure cooperating with the opening structure. The cooperation of the opening structure and the protruding structure can fix the separation member and the end cover assembly, thereby reducing the risk of movement of the separation member.

However, the opening structure of the separation member is prone to deformation when subjected to an external force. For example, when the opening structure is subjected to pressure, the opening structure will expand outward, so that the dimension of the opening structure in the thickness direction of the separation member becomes smaller. In the battery cell, the separation member and the electrode assembly are in the state of tightly pressing each other. When the dimension of the opening structure in the thickness direction becomes smaller, a gap occurs between the separation member and the electrode assembly in the thickness direction of the separation member, and the electrode assembly shakes within the housing, increasing the risk of tearing the tab of the electrode assembly, which is not conducive to the improvement of the reliability of the battery cell.

In view of this, the embodiments of the present application provide a battery cell, and the battery cell includes a separation member. In the separation member, an outer side wall of the opening structure is provided with a reinforcing structure connected to the opening structure. In this way, the opening structure can be reinforced, and the risk of deformation of the opening structure is reduced, which helps to improve the reliability of the battery cell.

The technical solutions described in the embodiments of the present application are applicable to various apparatuses that use batteries, such as mobile phones, portable devices, laptops, electric bicycles, electric toys, electric tools, electric vehicles, ships, and spacecraft. For example, the spacecraft includes an airplane, a rocket, a space shuttle, and a spaceship.

It is to be understood that the technical solutions described in the embodiments of the present application are not limited to the devices described above, but are applicable to all devices that use batteries. However, for the sake of brevity, the following embodiments are illustrated using electric vehicles as examples.

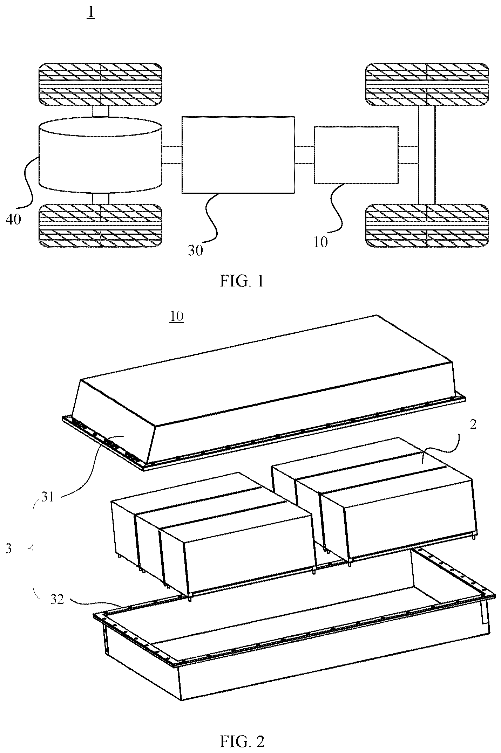

For example, FIG. 1 is a schematic structural diagram of a vehicle according to one embodiment of the present application. The vehicle 1 may be a fuel vehicle, a gas vehicle, or a new energy vehicle. The new energy vehicle may be a pure electric vehicle, a hybrid vehicle, or an extended-range vehicle. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be used to supply power to the vehicle 1. For example, the battery 10 may serve as an operation power source for the vehicle 1 and is used in a circuit system of the vehicle 1, for example, for operation power needed for starting, navigating, and driving of the vehicle 1. In another embodiment of the present application, the battery 10 may not only serve as an operation power source for the vehicle 1, but also serve as a driving power source for the vehicle 1 to, instead of or in part instead of fuel or natural gas, provide driving power for the vehicle 1.

To meet different power usage requirements, the battery 10 may include a plurality of battery cells. For example, FIG. 2 is a schematic structural diagram of a battery according to one embodiment of the present application. The battery 10 may include a plurality of battery cells 2. The battery 10 may further include a case 3, and the interior of the case 3 is a hollow structure. The plurality of battery cells 2 are accommodated in the case 3. For example, the plurality of battery cells 2, after being connected in parallel, in series, or in series-parallel connection, are disposed inside the case 3. The case 3 may include a first case 31 and a second case 32. The first case 31 and the second case 32 are fitted with each other to form the case 3. The first case 31 and the second case 32 may both be hollow structures with an opening at one end. Alternatively, the first case 31 may be a plate-shaped structure, while the second case 32 may be a hollow structure with an opening at one end.

Optionally, the battery 10 may further include other structures, which are not described in detail herein. For example, the battery 10 may further include a busbar component, and the busbar component is configured to achieve electrical connection among the plurality of battery cells 2, such as in parallel, in series, or in series-parallel connection. Specifically, the busbar component may achieve electrical connection among the battery cells 2 by connecting to the electrode lead-out members of the battery cells 2. Further, the busbar component may be fixed to the electrode lead-out member of the battery cells 2 by welding. The electrical energy of the plurality of battery cells 2 can be further conducted through a conductive mechanism passing through the case 3. Optionally, the conductive mechanism may also belong to the busbar component.

Based on different power requirements, the number of the battery cells 2 may be set to any numerical value. The plurality of battery cells 2 may be connected in series, in parallel, or in series-parallel connection to achieve a higher capacity or power. Since each battery 10 may include a relatively large number of the battery cells 2, the battery cells 2 may be arranged in groups for ease of mounting, with each group of the battery cells 2 forming a battery module. The number of the battery cells 2 included in the battery module is not limited and may be set according to requirements. The battery may include a plurality of battery modules. The plurality of battery modules may be connected in series, in parallel, or in series-parallel connection.

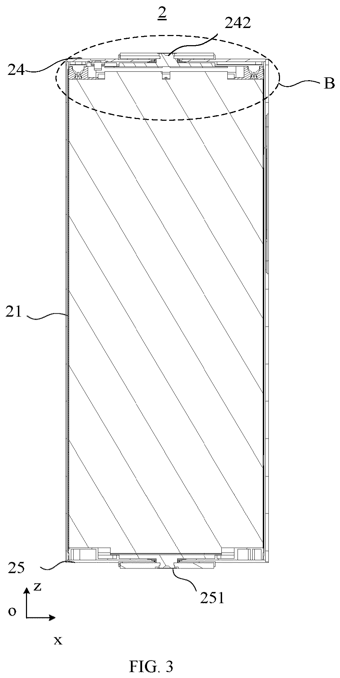

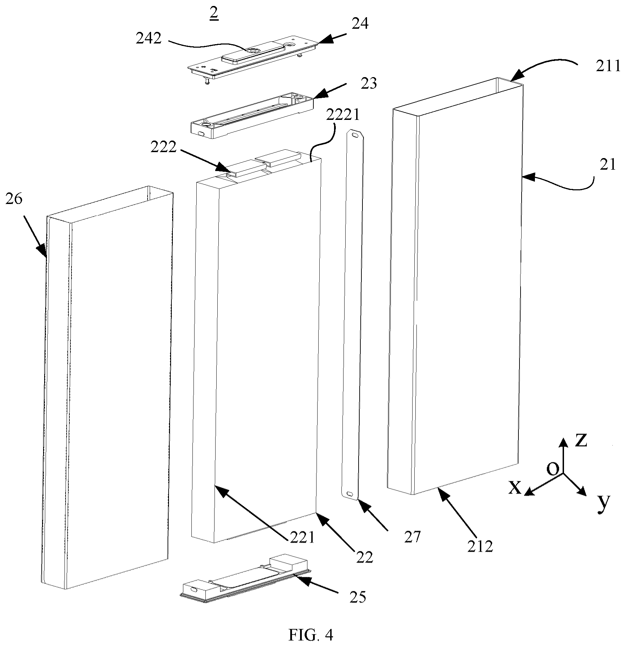

FIG. 3 is a schematic structural diagram of a battery cell according to an embodiment of the present application, and FIG. 4 is a schematic exploded structure view of a battery cell according to an embodiment of the present application. For example, as shown in FIG. 3 and FIG. 4, the embodiments of the present application provide a battery cell 2, which includes a housing 21, an electrode assembly 22, a separation member 23, and a first end cover assembly 24.

The housing 21 is provided with a first opening 211, and the first end cover assembly 24 is configured to cover the first opening 211.

The housing 21 may be a hollow structure with one side open, or a hollow structure with two sides open. For example, the housing 21 is provided with an opening, and the opening is the first opening 211. For another example, the housing 21 may be further provided with an opening other than the first opening 211.

The housing 21 is configured to accommodate the electrode assembly 22, where the shape of the housing 21 can be determined according to the shape of one or more electrode assemblies 22 after combination. For example, as shown in FIG. 4, the housing 21 is a hollow rectangular parallelepiped. The embodiments of the present application include but are not limited thereto. The housing 21 may further be a hollow cube, a hollow cylinder, or other shapes.

The housing 21 may be made of various materials. For example, the housing 21 may be made of metal or plastic. As some examples, the housing 21 may be made of copper, iron, aluminum, steel, aluminum alloy, or the like.

The first end cover assembly 24 includes a protruding structure 241 and a first electrode lead-out member 242. The first electrode lead-out member 242 is configured to electrically connect the electrode assembly 22 to a circuit outside the battery cell 2 to achieve charging and discharging of the electrode assembly 22. As an example, at least a part of the first electrode lead-out member 242 is exposed to the outside of the battery cell 2 to facilitate connection with the busbar component, thereby leading out the electrical energy generated by the electrode assembly 22.

The electrode assembly 22 is accommodated in the housing 21. The electrode assembly 22 includes a main body part 221 and a tab 222 extending from the main body part 221.

One end of the main body part 221 has an end surface 2221, and the tab 222 extends from the end surface 2221.

The tab 222 can be directly connected to the first electrode lead-out member 242, or can be indirectly connected to the first electrode lead-out member 242 via other conductive structures.

A plurality of tabs 222 may be provided. The plurality of tabs 222 include a positive electrode tab and a negative electrode tab. The positive electrode tab and the negative electrode tab may be led out from the same end of the main body part 221, or may be respectively led out from two opposite ends of the main body part 221 in the thickness direction of the first end cover assembly 24.

The tab 222 may include a plurality of tab layers, the plurality of tab layers being stacked together to form the tab 222. The tab 222 may include at least two parts. One part is located between the main body part 221 and the separation member 23, and another part is located between the separation member 23 and the first electrode lead-out member 242.

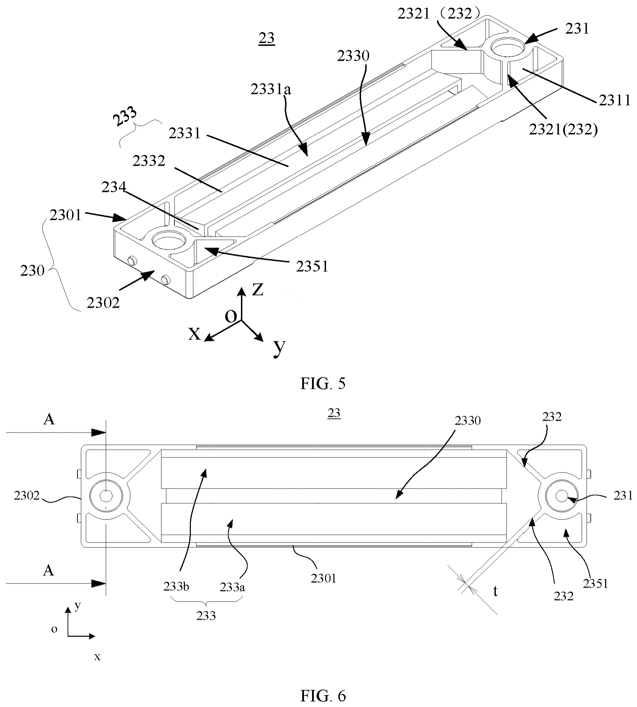

FIG. 5 is a three-dimensional schematic structural diagram of a separation member according to an embodiment of the present application. FIG. 6 is a top view of a separation member according to an embodiment of the present application. Referring to FIG. 4 to FIG. 6, the separation member 23 is at least partially disposed between the first electrode lead-out member 242 and the main body part 221.

The separation member 23 can insulate and separate at least a part of the tab 222 from the end surface 2221 of the main body part 221, so that when the battery cell 2 is affected by external impact, vibration, or the like, the risk of the tab 222 being inserted into the main body part 221 is reduced, thereby reducing the risk of short circuit of the battery cell 2, which helps to improve the reliability of the battery cell 2.

The separation member 23 may be partially disposed between the first electrode lead-out member 242 and the main body part 221, or may be entirely disposed between the first electrode lead-out member 242 and the main body part 221.

The separation member 23 may be of an integrated structure or a split-type structure. As an example, the separation member 23 is formed by connecting a plurality of independently formed parts. As another example, the separation member 23 is integrally formed by punching.

The separation member 23 includes an opening structure 231, a reinforcing structure 232, and a separation plate 233.

The separation plate 233 may be of an integrated structure or a split-type structure. The separation plate 233 can insulate and separate the end surface 2221 of the main body part 221 from at least a part of the tab 222.

The opening structure 231 is disposed in a protruding manner on the surface of the separation plate 233 facing the first end cover assembly 24 and is snap-fitted to the protruding structure 241. In this way, the separation member 23 can be fixedly connected to the first end cover assembly 24, so that the risk of movement of the separation member 23 in the battery cell 2 can be reduced, thereby reducing the risk of pulling or tearing the tab 222.

The opening structure 231 has an outer side wall 2311 and an inner side wall, the inner side wall faces the opening of the opening structure 231, and the outer side wall 2311 faces away from the opening of the opening structure 231.

For example, in the case where the cross section of the opening structure 231 is circular, the opening structure 231 has a cylindrical outer side wall 231; and in the case where the cross section of the opening structure 231 is square, the opening structure 231 has a prismatic outer side wall 231.

The reinforcing structure 232 is connected to the outer side wall 2311 of the opening structure 231. In other words, the reinforcing structure 232 is connected to the outer side wall 2311 of the opening structure 231 and extends in the direction away from the opening structure 231.

Compared with the region of the separation member 23 where the opening structure 231 is not provided, the strength of the opening structure 231 is relatively weak, and the opening structure is prone to deformation when subjected to an external force. During the assembly, transportation, or use of the battery cell, the opening structure 231 may be squeezed. After the opening structure 231 is squeezed, the opening structure 231 may expand outward. That is, the opening of the opening structure 231 will become larger, and the dimension of the opening structure 231 in the thickness direction of the separation plate 233 will become smaller.

Since the reinforcing structure 232 is connected to the outer side wall 2311 of the opening structure 231, when the opening structure 231 is subjected to an external force, the reinforcing structure 232 can disperse the force applied to the opening structure 231 and can reinforce the opening structure 231 to some extent, thereby reducing the risk of deformation of the opening structure 231.

When the battery cell is subjected to squeezing, shaking, collision, or the like, by providing the reinforcing structure 232, the risk of decrease of the dimension of the opening structure 231 in the thickness direction of the separation plate 233 is reduced, so that a relatively good fitting relationship can be maintained between the separation member 23 and the electrode assembly 22 (for example, there will be no gap between the electrode assembly 22 and the separation plate 233 in the thickness direction of the separation plate 233). The electrode assembly 22 will not shake in the housing 21, so that the risk of tearing the tab 222 of the electrode assembly 22 is reduced, which helps to improve the reliability of the battery cell 2.

In addition, providing the reinforcing structure 232 also facilitates the assembly of the battery cell 2. This is described by using the battery cell 2 including the housing 21, the electrode assembly 22, the first end cover assembly 24, an insulating film 26 configured to separate the electrode assembly 22 from the housing 21, and a side support plate 27 configured to support the electrode assembly 22 and located between the electrode assembly 22 and the housing 21 as an example. In the process of assembling the protruding structure 241 of the first end cover assembly 24 and the opening structure 231 of the separation member 23, pressure toward the separation member 23 needs to be applied to the first end cover assembly 24 to allow the protruding structure 241 to seat firmly in the opening structure 231. By providing the reinforcing structure 232, the opening structure 231 of the separation member 23 has a relatively large strength, and the risk of deformation of the opening structure 231 in the thickness direction of the separating plate 233 is reduced, so that the force applied to the first end cover assembly 24 can be transferred to the electrode assembly 22 through the separation member 23, thereby pressing the electrode assembly 22 tightly against the separation member 23. In addition, the force applied to the first end cover assembly 24 will not be transferred to the insulating film 26 and the side support plate 27 due to the deformation of the opening structure 231, so that the impact on the insulating film 26 and the side support plate 27 can be reduced, thereby facilitating the assembly of the battery cell 2.

In the embodiments of the present application, the separation member 23 is at least partially disposed between the first electrode lead-out member 242 and the main body part 221, so that the tab 222 can be at least partially separated from the main body part 221 of the electrode assembly 22, thereby reducing the risk of the tab 222 being inserted into the main body part 221 and the risk of short circuit of the battery cell 2 when the battery cell 2 is subjected to an impact or the like. The opening structure 231 of the separation member 23 is disposed in a protruding manner on the surface of the separation plate 233 facing the first end cover assembly 24 and is snap-fitted to the protruding structure 241. In this way, the separation member 23 can be fixedly connected to the first end cover assembly 24, so that the risk of movement of the separation member 23 in the battery cell 2 can be reduced, thereby reducing the risk of pulling or tearing the tab 222. Since the reinforcing structure 232 is connected to the outer side wall 2311 of the opening structure 231, the reinforcing structure 232 can disperse the force applied to the opening structure 231 and can reinforce the opening structure 231 to some extent. This reduces the risk of deformation of the opening structure 231 when subjected to an external force, which helps to reduce the risk of tearing the tab 222 due to the deformation of the opening structure 231, thereby improving the reliability of the battery cell 2.

In some embodiments, the separation member 23 further includes a side plate 230. The side plate 230 surrounds the outer side of the separation plate 233. The side plate 230 protrudes from the side of the separation plate 233 facing away from the main body part 221. The reinforcing structure 232 is connected between the outer side wall 2311 of the opening structure 231 and the side plate 230.

The side plate 230 may be formed into a loop shape, for example, a circular ring shape, a rectangle, or other irregular shapes. The embodiments of the present application include but are not limited thereto.

Since the side plate 230 surrounds the outer side of the separation plate 233 and protrudes from the side of the separation plate 233 facing away from the main body part 221, the separation plate 233 and the side plate 230 can jointly define an accommodating recess, and the accommodating recess can accommodate at least a part of the tab 22. In addition, since the reinforcing structure 232 is connected between the outer side wall 2311 of the opening structure 231 and the side plate 230, when the opening structure 231 is subjected to an external force, the force applied to the opening structure 231 can be dispersed to the side plate 230 of the separation member 23 by the reinforcing structure 232, thereby reducing the risk of deformation of the opening structure 231, especially the risk of deformation of the opening structure 231 in the thickness direction of the separation plate 233.

In some embodiments, the reinforcing structure 232 extends in the direction away from the opening structure 231. One end of the reinforcing structure 232 is connected to the outer side wall 2311 of the opening structure 231, and the other end does not extend to the side plate 230.

In some embodiments, the side plate 230 includes two long side walls 2301 and two short side walls 2302. The two long side walls 2301 are respectively located on the two sides of the separation plate 233 in the first direction, and the two short side walls 2302 are respectively located on the two sides of the separation plate 233 in the second direction. The first direction is the width direction of the separation plate 233, and the second direction is the length direction of the separation plate 233.

For example, as shown in FIG. 5 and FIG. 6, the first direction is the y direction, and the second direction is the x direction.

The reinforcing structure 232 includes a first reinforcing structure 2321. One end of the first reinforcing structure 2321 is connected to the outer side wall 2311 of the opening structure 231, and the other end is connected to the long side wall 2301.

The first reinforcing structure 2321 can be in the shape of a long strip, for example, in the shape of a straight strip.

As an example, the first reinforcing structure 2321 is a plate parallel to the first direction. In this way, the force applied to the opening structure 231 can be transferred and dispersed to the long side wall 2301 by the first reinforcing structure 2321, thereby reducing the deformation of the opening structure 231 in the thickness direction of the separation member 23.

As another example, the first reinforcing structure 2321 is an inclined plate, that is, the first reinforcing structure 2321 is neither parallel to the second direction nor parallel to the first direction. In this way, the first reinforcing structure 2321 can have a relatively long length, which helps to better disperse the force applied to the opening structure 231, thereby better reinforcing the opening structure 231.

When the opening structure 231 is subjected to an external force, the force applied to the opening structure 231 can be dispersed to the long side wall 2301 by the reinforcing structure 232, thereby reducing the risk of deformation of the opening structure 231.

In some embodiments, the reinforcing structure 232 includes two first reinforcing structures 2321, and the two first reinforcing structures 2321 are respectively connected to the two long side walls 2301.

By providing two first reinforcing structures 2321, the opening structure 231 can be better supported and reinforced, thereby further reducing the risk of deformation of the opening structure 231.

In some embodiments, the two first reinforcing structures 2321 corresponding to one opening structure 231 are symmetrically disposed in the second direction. In this way, the opening structure 231 can be provided with relatively large support and reinforcement by a relatively small number of reinforcing structures 232.

In the case where the separation member 23 includes two opening structures 231, the separation member 23 may be correspondingly provided with four first reinforcing structures 2321. The outer side wall 2311 of each opening structure 231 is connected to two first reinforcing structures 2321, and the two first reinforcing structures 2321 are symmetrically disposed in the second direction.

In some embodiments, the reinforcing structure 232 includes a second reinforcing structure (not shown in the figures). One end of the second reinforcing structure is connected to the outer side wall 2311 of the opening structure 231, and the other end is connected to the short side wall 2302.

For example, the extension direction of the second reinforcing structure is parallel to the length direction of the separation plate 233, and the second reinforcing structure extends from the outer side wall 2311 to the short side wall 2302 in the length direction of the separation plate 233.

For another example, there is a certain included angle between the extension direction of the second reinforcing structure and the length direction of the separation plate 233. The extension direction is neither parallel to the length direction of the separation plate 233 nor parallel to the width direction of the separation plate 233. The second reinforcing structure extends from the outer side wall 2311 to the short side wall 2302 in the extension direction.

In the embodiments, in the case where the opening structure 231 is subjected to an external force, the force applied to the opening structure 231 can be dispersed to the short side wall 2302 by the reinforcing structure 232, thereby reducing the risk of deformation of the opening structure 231.

In some embodiments, the outer side wall 2311, the reinforcing structure 232, the side plate 230, and the separation plate 233 form, in an enclosing manner, a first recess space 2351. The region of the separation plate 233 opposite to the first recess space 2351 is provided with at least one through hole (not shown in the figures) penetrating through the separation plate 233.

The first recess space 2351 is a relatively enclosed space and is more prone to electrolyte accumulation. By providing at least one through hole penetrating through the separation plate 233 in the region of the separation plate 233 opposite to the first recess space 2351, the electrolyte can flow out of the first recess space 2351 via the through hole, thereby reducing the risk of electrolyte accumulation in the first recess space 2351.

In some embodiments, the opening structure 231 is a regular prism structure, and the extension direction of the reinforcing structure 232 passes through the center of the opening structure 231.

The center of the opening structure 231 is the geometric center of the opening structure 231. For example, in the case where the cross section of the opening structure 231 is circular, the extension direction of the reinforcing structure 232 passes through the center of the circular cross section. For another example, in the case where the cross section of the opening structure 231 is square/rectangular, the extension direction of the reinforcing structure 232 passes through the intersection point of the two diagonal lines of the direction cross section.

The opening structure 231 is a regular prism structure, that is, the cross section of the opening structure 231 may be a regular polygon. For example, the cross section is a square.

As another example, the opening structure 231 is a right prism structure or a cylinder structure, and the cross section of the opening structure 231 is polygonal or circular.

The extension direction of the reinforcing structure 232 passes through the center of the opening structure 231 and the reinforcing structure 232 has a relatively long length, which helps to better reinforce the structure of the opening structure 231, thereby further reducing the risk of deformation of the opening structure 231.

In some embodiments, the opening structure 231 is a groove extending in the thickness direction of the separation plate 233 or a hole penetrating through the separation plate 233. The thickness direction of the separation plate is the thickness direction of the separation member 23. In this way, the opening structure 231 is a groove or a hole with a certain depth. When the opening structure 231 is subjected to squeezing, collision, or the like, the reinforcing structure 232 can reinforce the stability of the opening structure 231, reducing the risk of decrease of the dimension of the opening structure 231 in the thickness direction of the separation plate.

In some embodiments, the cross section of the opening structure 231 is circular. In this way, the force applied to the opening structure 231 is more uniform, which helps the reinforcing structure 232 to more uniformly disperse the force applied to the opening structure 231.

In some embodiments, the separation plate 233 is provided with a channel 2330. The channel 2330 is disposed in the middle region of the separation plate 233 in the second direction. The tab 222 passes through the channel 2330 and is electrically connected to the first electrode lead-out member 242. The second direction is the length direction of the separation plate 233. The opening structure 231 is disposed in the end part region of the separation plate 233 in the second direction.

The end part region is the region closer to the end part relative to the middle region.

In the second direction, the dimension of the channel 2330 is smaller than the dimension of the separation plate 233 or the dimension of the separation member 23.

Since the channel 2330 is disposed in the middle region of the separation plate 233 in the second direction and the opening structure 231 is disposed in the end part region of the separation plate 233 in the direction, the alignment of the channel 2330 with the tab 222 is facilitated, thereby enabling the tab 222 to pass through the channel 2330 and to be electrically connected to the first electrode lead-out member 242.

In some embodiments, the opening structure 231 may be disposed in a non-end part region of the separation plate 233. For example, the opening structure is disposed in the middle region of the separation plate 233.

In some embodiments, the separation plate 233 includes an inclined plate 2331 and a connecting plate 2332 connecting the inclined plate 2331 and the side plate 230. The inclined plate 2331 includes an inclined surface 2331a facing away from the main body part 221. In the thickness direction of the separation plate 233, the minimum distance between one end of the inclined surface 2331a proximal to the channel 2330 and the main body part 221 is greater than the minimum distance between one end of the inclined surface 2331a distal to the channel 2330 and the main body part 221. One end of the reinforcing structure 232 is connected to the outer side wall 2311 of the opening structure 231, and the other end is connected to the side plate 230 and the connecting plate 2332.

The inclined plate 2331 is provided with two surfaces opposite to each other in the thickness direction thereof, where one surface is an inclined surface 2331a facing away from the main body part 221, and the other surface is an inclined surface 2331a facing the main body part 221.

The tab 222 includes a plurality of tab layers, the plurality of tab layers being processed to form the tab 222. A plurality of tab layers of the part of the tab 222 located between the separation member 23 and the main body part 221 form a tab inclined surface after being gathered. By providing the inclined surface 2331a of the inclined plate 2331, the gap between the tab 222 and the separation plate 233 can be reduced. This helps limit and shape the tab through the separation plate 233, contributing to maintaining the morphology of the tab 222.

The other end of the reinforcing structure 232 is connected to the side plate 230 and the connecting plate 2332. In other words, the other end of the reinforcing structure 232 is connected to the long side wall 2301 and the connecting plate 2332. In this way, the reinforcing structure 232, the long side wall 2301, and the connecting plate 2332 have the same intersection point, and the reinforcing structure 232 has a relatively long length. This configuration also helps to disperse the force to more regions of the separation member 23 by the reinforcing structure 232, thereby helping to further enhance the stability of the opening structure 231, and reducing the risk of deformation of the opening structure 231.

In some embodiments, referring to FIG. 5, the separation member 23 further includes a vertical plate 234, and two ends of the vertical plate 234 in the z direction are respectively connected to the inclined plate 2331 and the bottom surface of the separation member 23.

In some embodiments, the dimension of the inclined plate 2331 in the second direction is smaller than the dimension of the separation plate 233 as a whole in the second direction (or in other words, the dimension of the inclined plate 2331 in the second direction is smaller than the dimension of the separation member 23 in the second direction). That is, in the embodiments, in the second direction, in addition to the inclined plate 2331, the separation plate 23 further includes an additional plate-like structure. There is a certain height difference between the inclined plate 2331 and the additional plate-like structure in the z direction (or in other words, the inclined plate 2332 protrudes relative to the additional plate-like structure towards the first electrode lead-out member 242, and the additional plate-like structure may form at least a part of a bottom surface of the separation member 23).

In some embodiments, the separation plate 233 is of an integrated structure, that is, the separation plate 233 may be of a rectangular plate-like structure. The length of the separation plate 233 in the length direction (for example, the x direction in FIG. 5) of the separation member 23 is the same or substantially the same as the length of the separation member 23.

In some embodiments, the separation plate 233 includes a first sub-separation plate 233a and a second sub-separation plate 233b that are spaced apart, and the channel 2330 is formed between the first sub-separation plate 233a and the second sub-separation plate 233b.

The first sub-separation plate 233a and the second sub-separation plate 233b are disposed opposite to each other in a first direction. The first direction is the width direction of the separation plate 233, for example, the y direction in FIG. 5.

The first sub-separation plate 233a and the second sub-separation plate 233b can limit the tab 222 (for example, a part of the tab located between the end surface 2221 and the separation plate 233) to reduce shaking and deformation of the tab 222.

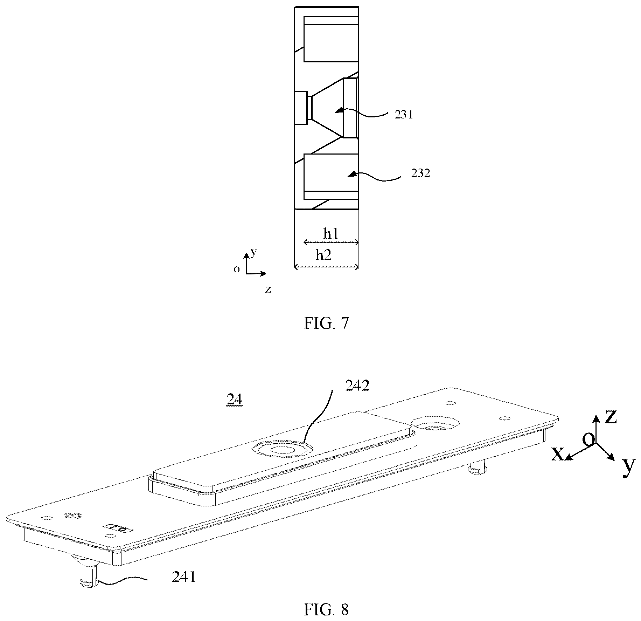

FIG. 7 is a cross-sectional view of the separation member in FIG. 6 in the A-A direction. In some embodiments, referring to FIG. 7, in the thickness direction of the separation plate 233, the dimension h1 of the reinforcing structure 232 and the dimension h2 of the opening structure 231 satisfy: 0.5h2 ≤ h1 ≤ h2.

For example, as shown in FIG. 5 and FIG. 7, the thickness direction of the separation plate 233 is the z direction.

The ratio of h1 to h2 may be 0.5, 0.7, 0.8, 1, or any value within the above range.

h1 may be the maximum dimension of the reinforcing structure 332 in the thickness direction of the separation plate 233, and h2 may be the maximum dimension of the opening structure 231 in the thickness direction of the separation plate 233. For example, in the case where the opening structure 231 is a groove, h2 is the maximum depth of the groove.

In the case where h1 ≥ 0.5h2, the reinforcing structure 232 has a relatively appropriate dimension in the thickness direction of the separation plate 233, so that it can support and reinforce the opening structure 231. In the case where h1 ≤ h2, in the thickness direction of the separation plate 233, the reinforcing structure 232 does not extend beyond the opening structure 231, which can reduce the risk of interference between the reinforcing structure 232 and other components in the battery cell 2.

In the embodiments, since 0.5h2 ≤ h1 ≤ h2, the reinforcing structure 232 can not only provide relatively strong support and structural reinforcement for the opening structure 231, but also reduce the risk of interference between the reinforcing structure 232 and other components in the battery cell 2.

As an example, in the thickness direction of the separation plate, the dimension h1 of the reinforcing structure 232 is the same as the dimension h2 of the opening structure 231.

In some embodiments, the thickness t of the reinforcing structure 232 satisfies: 0.4 mm ≤ t ≤ 2 mm. t may be 0.4 mm, 1 mm, 1.5 mm, 2 mm, or any value within the above range.

The thickness t of the reinforcing structure 232 is the average thickness of the reinforcing rib 232, that is, the average value of the maximum thickness and the minimum thickness. For a well-manufactured reinforcing structure 232, the thickness of the reinforcing structure 232 is uniform. In the extension direction of the reinforcing structure 232, at different positions, the reinforcing structure 232 has the same thickness.

In the case where t ≥ 0.4 mm, the reinforcing structure 232 has an appropriate thickness, so that it can well support and reinforce the opening structure 231. In the case where t ≤ 2 mm, the manufacturing of the reinforcing structure 232 is facilitated. Thereby, the risk of the unevenness of the surface of the reinforcing structure 232 and the unevenness of the thickness at different positions of the reinforcing structure 232 can be reduced.

In the embodiments, since 0.4 mm ≤ t ≤ 2 mm, the reinforcing structure 232 can provide strong support and structural reinforcement for the opening structure 231, and the manufacturing of a reinforcing structure 232 with uniform thickness and flat surface can be facilitated as well.

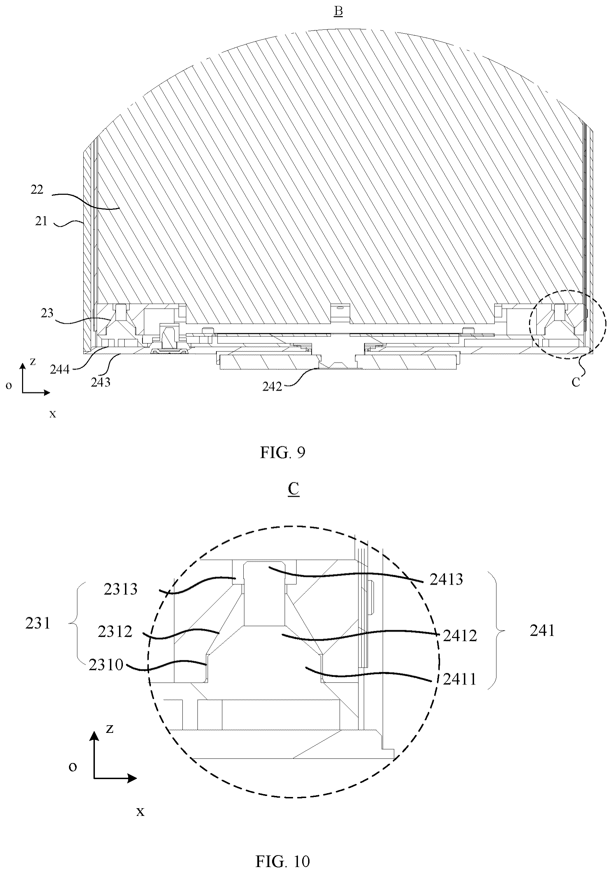

FIG. 8 is a schematic structural diagram of a first end cover assembly according to an embodiment of the present application. FIG. 9 is a schematic structural diagram of region B of the battery cell in FIG. 3, and FIG. 10 is an enlarged schematic diagram of region C in FIG. 9. In some embodiments, referring to FIG. 8 to FIG. 10, the first end cover assembly 24 includes an insulating member 244 and an end cover 243. The end cover 243 is configured to cover a first opening 211 of a housing 21. The insulating member 244 is provided with a protruding structure 241.

The insulating member 244 is configured to separate the end cover 243 and the electrode assembly 22, and the insulating member 244 and the protruding structure 241 may be an integrally formed structure.

The first electrode lead-out member 242 is disposed on the end cover 243 of the first end cover assembly 24, and the tab 222 of the electrode assembly 22 passes through the channel 2330 of the separation member 23 and is connected to the first electrode lead-out member 242.

The end cover 243 may be made of metal and capable of conducting electricity, and the insulating member 244 may be a plastic product.

In the embodiments, by providing the first end cover assembly 24, the connection between the first end cover assembly 24, the separation member 23, and the electrode assembly 22 is facilitated.

In some embodiments, for example, as shown in FIG. 10, the protruding structure 241 includes a first fixing part 2411, a transition part 2412, and a snap part 2413 connected in sequence. The opening structure 231 includes a second fixing part 2310, a guiding part 2312, and a slot part 2313 connected in sequence. The first fixing part 2411 abuts against the second fixing part 2310 to facilitate the fixing of the protruding structure 241 and the opening structure 231 in the second direction. The snap part 2413 is snap-fitted into the slot part 2313 to facilitate the fixing of the protruding structure 241 and the opening structure 231 in the thickness direction of the separation plate 233. The guiding part 2312 helps to guide the protruding structure 241 to enter the opening structure 231. The transition part 2412 facilitates the connection between the first fixing part 2411 and the snap part 2413.

As an example, in the thickness direction of the separation plate 233 (for example, the z direction in FIG. 10), the snap part 2413 does not extend beyond the slot part 2313. In this way, the risk of damaging the electrode assembly 22 caused by the snap part 2413's abutting against the electrode assembly 22 can be reduced.

In some embodiments, the housing 21 is provided with a second opening 212 opposite to the first opening 211. The battery cell 2 further includes a second end cover assembly 25. The second end cover assembly 25 is configured to cover the second opening 212. In this way, the first end cover assembly 24 and the second end cover assembly 25 are configured to respectively cover the first opening 211 and the second opening 212 at the two ends of the housing 21, thereby facilitating the sealing of the housing 21.

Specifically, the first end cover assembly 24 and the second end cover assembly 25 are disposed opposite to each other in the thickness direction of the separation plate 233. The housing 21 is provided with a first opening 211 and a second opening 212 opposite to each other in the thickness direction of the separation plate 233. The first opening 211 is disposed at one end proximal to the separation member 23 in the thickness direction of the separation plate 233, and the second opening 212 is disposed at one end distal to the separation member 23 in the thickness direction of the separation plate 233. The first end cover assembly 24 is configured to cover the first opening 211, and the second end cover assembly 25 is configured to cover the second opening 212. As an example, as shown in FIG. 3, the second end cover assembly 25 is further provided with a second electrode lead-out member 251, the second electrode lead-out member 251 being opposite in polarity to the first electrode lead-out member 242 disposed on the first end cover assembly 24.

As an example, the second end cover assembly 25 has a structure different from that of the first end cover assembly 24, and the second end cover assembly 25 is not provided with a protrusion configured to cooperate with the opening structure 231.

In some embodiments, the battery cell 2 further includes an insulating film 26. The insulating film 26 is sleeved over the outer surface of the electrode assembly 22 and is disposed on the inner side of the housing 21. In this way, the electrode assembly 22 can be separated from the housing 21, thereby reducing the risk of short circuit caused by the contact between the electrode assembly 22 and the housing 21. In addition, the separation member 23 can also be connected to the electrode assembly 22 through the insulating film 26, thereby facilitating the assembly of the battery cell 2.

As an example, the insulating film 26 is a thermoplastic separation film, such as a mylar film.

In a possible implementation, the battery cell 2 further includes a side support plate 27. The side support plate 27 is disposed between the electrode assembly 22 and the inner side of the housing 21. The side support plate 27 can provide support to the electrode assembly 22. In addition, the electrode assembly 22 and the separation member 23 can also be connected through the side support plate 27, thereby facilitating the assembly of the battery cell 2.

The embodiments of the present application provide a battery, which includes the battery cell 2 according to any one of the above embodiments.

The embodiments of the present application provide an electric device, which includes the battery according to the above embodiments. The battery is configured to supply power to the electric device.

The embodiments of the present application provide a battery cell 2. The battery cell 2 has relatively high reliability. The battery cell 2 includes a first end cover assembly 24, a separation member 23, an electrode assembly 22, and a housing 21. The housing 21 is configured to accommodate the electrode assembly 22, the first end cover assembly 24 is configured to cover the first opening 211 of the housing 21, the first end cover assembly 24 includes a protruding structure 241, the first end cover assembly 24 is provided with a first electrode lead-out member 242, and the electrode assembly 22 includes a main body part 221 and a tab 222. The separation member 23 is located between the first electrode lead-out member 242 and the main body part 221 of the electrode assembly 22. The separation member 23 includes an opening structure 231, a reinforcing structure 232, and a separation plate 233. The opening structure 231 is disposed in a protruding manner on the surface of the separation plate 233 facing the first end cover assembly 24 and is snap-fitted to the protruding structure 241. The reinforcing structure 232 is connected to an outer side wall 2311 of the opening structure 231.

Although the present application has been described with reference to preferred embodiments, various modifications can be made and components can be replaced with equivalents without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery cell, comprising:
a housing (21), provided with a first opening (211);
a first end cover assembly (24), configured to cover the first opening (211), the first end cover assembly comprising a protruding structure (241) and a first electrode lead-out member (242);
an electrode assembly (22), accommodated in the housing (21), the electrode assembly (22) comprising a main body part (221) and a tab (222) extending from the main body part (221); and
a separation member (23), at least partially disposed between the first electrode lead-out member (242) and the main body part (221); wherein
the separation member (23) comprises an opening structure (231), a reinforcing structure (232), and a separation plate (233), wherein the opening structure (231) is protrudingly disposed on a surface of the separation plate (233) facing the first end cover assembly (24) and is snap-fitted to the protruding structure (241), and the reinforcing structure (232) is connected to an outer side wall (2311) of the opening structure (231).

2. The battery cell according to claim 1, wherein the separation member (23) comprises a side plate (230) surrounding an outer side of the separation plate (233), the side plate (230) protrudes from a side of the separation plate (233) facing away from the main body part (221), and the reinforcing structure (232) is connected between the outer side wall (2311) of the opening structure (231) and the side plate (230).

3. The battery cell according to claim 2, wherein the side plate (230) comprises two long side walls (2301) and two short side walls (2302), the two long side walls (2301) are respectively located on two sides of the separation plate (233) in a first direction, and the two short side walls (2302) are respectively located on two sides of the separation plate (233) in a second direction; the first direction is a width direction of the separation plate (233), and the second direction is a length direction of the separation plate (233).

4. The battery cell according to claim 3, wherein the reinforcing structure (232) comprises a first reinforcing structure (2321), one end of the first reinforcing structure (2321) is connected to the outer side wall (2311) of the opening structure (231), and the other end is connected to the long side wall (2301).

5. The battery cell according to claim 4, wherein the reinforcing structure (232) comprises two first reinforcing structures (2321), and the two first reinforcing structures (2321) are respectively connected to the two long side walls (2301).

6. The battery cell according to claim 5, wherein the two first reinforcing structures (2321) are symmetrically disposed in the second direction.

7. The battery cell according to any one of claims 3 to 6, wherein the reinforcing structure (232) comprises a second reinforcing structure, one end of the second reinforcing structure is connected to the outer side wall (2311) of the opening structure (231), and the other end is connected to the short side wall (2302).

8. The battery cell according to any one of claims 2 to 7, wherein the outer side wall (2311), the reinforcing structure (232), the side plate (230), and the separation plate (233) enclose a first recess space (2351), and a region of the separation plate (233) opposite to the first recess space (2351) is provided with at least one through hole penetrating through the separation plate (233).

9. The battery cell according to any one of claims 1 to 8, wherein the opening structure (231) is a regular prism structure, and an extension direction of the reinforcing structure (232) passes through a center of the opening structure (231).

10. The battery cell according to any one of claims 1 to 9, wherein the separation plate (233) is provided with a channel (2330), the channel (2330) is disposed in a middle region of the separation plate (233) in the second direction, the tab (222) passes through the channel (2330) and is electrically connected to the first electrode lead-out member (242), and the second direction is the length direction of the separation plate (233);
the opening structure (231) is disposed in an end part region of the separation plate (233) in the second direction.

11. The battery cell according to claim 10, wherein the separation plate (233) comprises an inclined plate (2331) and a connecting plate (2332) connecting the inclined plate (2331) and the side plate (230), and the inclined plate (2331) comprises an inclined surface (2331a) facing away from the main body part (221); in a thickness direction of the separation plate (233), a minimum distance between an end of the inclined surface (2331a) proximal to the channel (2330) and the main body part (221) is greater than a minimum distance between an end of the inclined surface (2331a) distal to the channel (2330) and the main body part (221);
one end of the reinforcing structure (232) is connected to the outer side wall (2311) of the opening structure (231), and the other end is connected to the side plate (230) and the connecting plate (2332).

12. The battery cell according to claim 10 or 11, wherein the separation plate (233) comprises a first sub-separation plate (233a) and a second sub-separation plate (233b) that are spaced apart, and the channel (2330) is formed between the first sub-separation plate (233a) and the second sub-separation plate (233b).

13. The battery cell according to any one of claims 1 to 12, wherein in the thickness direction of the separation plate (233), a dimension h1 of the reinforcing structure (232) and a dimension h2 of the opening structure (231) satisfy: 0.5h2 ≤ h1 ≤ h2.

14. The battery cell according to any one of claims 1 to 13, wherein a thickness t of the reinforcing structure (232) satisfies: 0.4 mm ≤ t ≤ 2 mm.

15. The battery cell according to any one of claims 1 to 14, wherein the first end cover assembly (24) comprises an end cover (243) and an insulating member (244), the end cover (243) is configured to cover the first opening (211), and the insulating member (244) is provided with the protruding structure (241).

16. The battery cell according to any one of claims 1 to 15, wherein the housing (21) is provided with a second opening (212) opposite to the first opening (211);
the battery cell further comprises a second end cover assembly (25), and the second end cover assembly (25) is configured to cover the second opening (212).

17. The battery cell according to any one of claims 1 to 16, further comprising:
an insulating film (26), wherein the insulating film (26) is sleeved over an outer surface of the electrode assembly (22) and is disposed on an inner side of the housing (21).

18. The battery cell according to any one of claims 1 to 17, further comprising:
a side support plate (27), the side support plate (27) being disposed between the electrode assembly (22) and the inner side of the housing (21).

19. A battery, comprising: the battery cell according to any one of claims 1 to 18.

20. An electric device, comprising: the battery according to claim 19.
